# EUROPEAN PATENT SPECIFICATION

(11) **EP 4 283 860 B1**
(45) Date of publication and mention of the grant of the patent: **02.04.2025**
(21) Application number: 21840070.3
(22) Date of filing: 15.11.2021
(51) Int. Cl.: H02P 6/30, E05F 15/603

(54) **TORQUE PROTECTION MECHANISM FOR BRUSHLESS MOTORS**
DREHMOMENTSCHUTZMECHANISMUS FÜR BÜRSTENLOSE MOTOREN
MÉCANISME DE PROTECTION DE COUPLE POUR MOTEUR SANS BALAI

(43) Date of publication of application: 29.11.2023
(73) Proprietor: Chaves García, Jordi, 08450 Llinars del Vallès (Barcelona) (ES); Chaves García, Juan Miguel, 08450 Llinars del Vallès (Barcelona) (ES)
(72) Inventor: Chaves García, Jordi, 08450 Llinars del Vallès (Barcelona) (ES); Chaves García, Juan Miguel, 08450 Llinars del Vallès (Barcelona) (ES)
(74) Representative: Hernández Hernández, Carlos
(86) International application number: PCT/ES2021/070822
(87) International publication number: WO 2022/180286

(56) References cited:
- US-A1- 2010 115 853
- US-A1- 2019 024 431
- US-B1- 9 995 076

## Description

### Technical field

The subject matter of this invention, as established by its title, is a torque protection mechanism for brushless motors, a particular feature of which is the fact that the protection is provided on the basis of measurement of the motor rotation speed and not the current drawn.

This invention is characterised by its particular design and configuration and the fact that it uses measurement of the motor rotation speed as the signal to identify whether a certain previously established torque has been surpassed.

This invention therefore falls into the field of brushless motors on the one hand, and, on the other, the field of motor torque protection.

### Background art

An electronic torque limiter is a component which is incorporated into the electric control panel in order to prevent possible breakdowns caused by mechanical overstressing.

The function of the torque limiter is to constantly monitor the nominal current drawn by the electric motor and, if a pre-established value is surpassed, to automatically disconnect the motor.

If a certain current is surpassed, the torque limiter will come into operation, as the nominal current drawn by the motor will be in excess of the pre-established value. The motor will therefore be electrically disconnected to prevent any problems or further damage. The torque limiter could also warn us with a signal that would enable us to solve the problem prior to starting up again.

Although the torque protection systems used to date achieve the intended purpose, they are complex and require measurement of the current at all times. Moreover, they are not as accurate as they could be, and are prone to fluctuations or variations which mean that the protection is not as effective as it should be.

Furthermore, a brushless electric motor is an electric motor which does not use brushes to reverse the polarity of the rotor.

Electric motors used to have a commutator or a pair of skip rings. These systems cause friction, decrease output, give off heat and noise, require a lot of maintenance and may produce carbon particles which cover the motor with a dust that can also act as a conductor.

The first brushless motors were asynchronous alternating current motors. Today, thanks to electronics, they offer many advantages, as they are cheap to manufacture, do not weigh much and require less maintenance. However, their control is far more complex. This complexity has been virtually eliminated by means of electronic speed controls (ESC). Document US 2010/115853 A1 discloses a power supply and a control unit and a brushless motor and mechanical reducer embodied as a gear.

The purpose of this invention is therefore to make use of the properties of brushless motors, specifically electronic speed controls, in order to establish torque protection for these motors. A mechanism has thus been developed as described below and its essential elements are set out in claim one.

### Summary of the invention

The essential elements of the subject matter of this invention are set out in the independent claim. The different embodiments are then set out in the dependent claims.

The subject matter of this invention is a torque protection mechanism for brushless motors which is comprised of the following:
- A power supply powered from the mains which supplies 24V AC in order to power both a brushless motor and the other modules of the mechanism.
- A rotation direction setter powered from the power supply, which has an opening and closing switch at the inlet and is connected to a control unit at the outlet.
- The control unit which is powered from the power supply receives signals from the rotation direction setter. This control unit is configurable and responsible for giving and receiving instructions from the valve actuator motor to ensure the proper functioning of the system. It is therefore connected to the motor itself and to a mechanical reducer.
- The mechanical reducer positioned at the motor outlet, which receives instructions from the control unit.

The connections between the control unit and the brushless motor are comprised of the following:
- Two power connections
- An on-off connection
- An opening and closing connection
- A connection in which the motor informs the control unit of the speed at which it is rotating
- A connection for the control unit to inform the motor that a shutdown has occurred due to over-torque

The control unit receives the rotation direction information and transmits it to the motor, also transmitting the start-up of the motor. The motor will stop in the position indicated to it by the limit switches which are included in the mechanical module.

When the shutdown takes place due to over-torque, the control unit cuts the ON signal and sends a BREAK order.

The mechanism enables torque protection for a brushless motor without the need to use measurement of the current drawn, making use of the systems that the brushless motors already have in place to control the speed, and establishing the torque level based on measurement of the brushless motor rotation speed. The rotation speed corresponding to the nominal torque has therefore been previously established so that when there is over-torque, the rotation speed is decreased. This makes it possible to infer that there is over-torque, thus achieving torque protection for brushless motors which is effective, simple and highly economical.

Unless indicated otherwise, all the technical and scientific elements used in this report will have the meaning that would usually be understood by a typical expert in the technology to which this invention belongs. In the implementation of this invention, procedures and materials similar or equivalent to those described in the report may be used.

Throughout the description and the claims, the world "comprises" and its variants are not intended to exclude any other technical characteristics, additions, components or steps. For experts in the field, other purposes, advantages and characteristics of the invention may be inferred in part from the description and in part from implementation of the invention.

### Brief description of drawings

In order to supplement the description provided and to enable a better understanding of the characteristics of the invention, in accordance with a preferred example of practical embodiment, attached as an integral part of the description is a set of diagrams which, for illustration purposes only, represent the following.

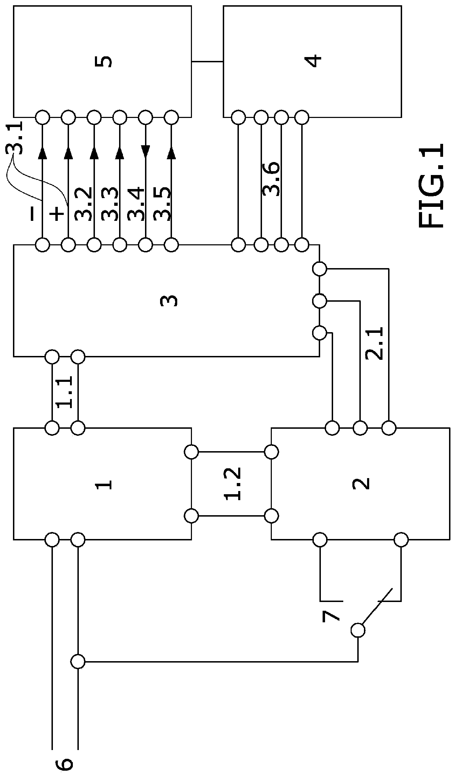

In figure 1, we can see a general outline for the connections of the modules that form part of the protection mechanism for brushless motors.

### Description of embodiments

Based on the attached figures, the preferred embodiment of the proposed invention is described below.

In figure 1, we can see that the protection mechanism for brushless motors is comprised of the following:
A power supply (1), powered from the mains (6) which is responsible for generating a voltage of 24V AC in order to power the other modules.
A rotation direction setter (2) which receives power from the power supply (1) by means of a power connection (1.2). The rotation direction setter (2) has an opening and closing switch (7) at the inlet which is connected to an input power phase
A control unit (3) which receives power from the power supply (1) by means of a power connection (1.1) and is connected to the rotation direction setter (2) by means of three connections (2.1). The control unit is configurable and responsible for giving and receiving the instructions from the brushless motor, as well as ensuring its proper functioning.
A brushless motor (5) which is connected to the control unit, specifically by means of:
   o Two primary power connections (3.1)
   o A third connection (3.2) to send an instruction from the on-off control unit to the motor (5)
   o A fourth connection (3.3) to send an opening/closing instruction from the control unit (3) to the motor (5)
   o A fifth connection (3.4) to send the rotation revolutions of the motor (5) to the control unit
   o A sixth connection (3.5) to send a BREAK instruction from the control unit (3) to the motor (5), a signal which is sent when a shutdown occurs due to over-torque
A mechanical reducer (4) connected mechanically to the shaft of the brushless motor (5) which is connected to the control unit (3) by means of a set of connections for sending information and two-way action.

## Claims

1. Protection mechanism for brushless motors which is comprised of the following:
- A power supply (1) powered from the mains (6) which is responsible for generating a voltage of 24V AC in order to power the other modules; **characterised by**
- A rotation direction setter (2) which receives power from the power supply (1) by means of a power connection (1.2), wherein the rotation direction setter (2) has an opening and closing switch (7) at the inlet which is connected to an input power phase;
- A control unit (3) which receives power from the power supply (1) by means of a power connection (1.1) and is connected to the rotation direction setter (2). The control unit is configurable and responsible for giving and receiving the instructions from the brushless motor;
- A brushless motor (5) which is connected to the control unit, specifically by means of:
o Two primary power connections (3.1);
o A third connection (3.2) to send an instruction from the on-off control unit to the motor (5);
o A fourth connection (3.3) to send an opening/closing instruction from the control unit (3) to the motor (5);
o A fifth connection (3.4) to send the rotation revolutions of the motor (5) to the control unit;
o A sixth connection (3.5) to send a BREAK instruction from the control unit (3) to the motor (5), a signal which is sent when a shutdown occurs due to over-torque;
- A mechanical reducer (4) connected mechanically to the shaft of the brushless motor (5) which is connected to the control unit (3) by means of a set of connections for sending information and bidirectional actuation.

2. Protection mechanism for brushless motors according to claim 1 which is **characterised by** the control unit (3) being connected to the rotation direction setter (2) by means of three connections (2.1).

3. Protection mechanism for brushless motors according to claim 1 or 2 which is **characterised by** the mechanical reducer (4) being connected to the control unit (3) by means of four connections.

## Patentansprüche

1. Schutzmechanismus für bürstenlose Motoren, der Folgendes umfasst:
- eine vom Netz (6) gespeiste Stromversorgung (1), die für die Erzeugung einer Spannung von 24 V AC verantwortlich ist, um die anderen Module mit Strom zu versorgen; **gekennzeichnet durch**
- einen Drehrichtungseinsteller (2), der mittels eines Stromanschlusses (1.2) Strom von der Stromversorgung (1) empfängt, wobei der Drehrichtungseinsteller (2) am Einlass einen Öffnungs- und Schließschalter (7) aufweist, der mit einer Eingangsstromphase verbunden ist;
- eine Steuereinheit (3), die über einen Stromanschluss (1.1) Strom von der Stromversorgung (1) empfängt und mit dem Drehrichtungseinsteller (2) verbunden ist. Die Steuereinheit ist konfigurierbar und für das Geben und Empfangen von Anweisungen vom bürstenlosen Motor verantwortlich;
- einen bürstenlosen Motor (5), der mit der Steuereinheit verbunden ist, insbesondere **durch**:
∘ zwei primäre Stromanschlüsse (3.1);
∘ einen dritten Anschluss (3.2) zum Senden einer Anweisung von der Ein-Aus-Steuereinheit an den Motor (5);
∘ einen vierten Anschluss (3.3) zum Senden einer Öffnungs-/Schließanweisung von der Steuereinheit (3) an den Motor (5);
o einen fünften Anschluss (3.4) zum Senden der Umdrehungen des Motors (5) an die Steuereinheit;
o einen sechsten Anschluss (3.5) zum Senden einer BREAK-Anweisung von der Steuereinheit (3) an den Motor (5) - ein Signal, das gesendet wird, wenn aufgrund eines überhöhten Drehmoments eine Abschaltung erfolgt;
- ein mechanisches Untersetzungsgetriebe (4), das mechanisch mit der Welle des bürstenlosen Motors (5) verbunden ist, der mit der Steuereinheit (3) zum Senden von Informationen und zur bidirektionalen Betätigung über eine Reihe von Anschlüssen verbunden ist.

2. Schutzmechanismus für bürstenlose Motoren nach Anspruch 1, **dadurch gekennzeichnet, dass** die Steuereinheit (3) mithilfe von drei Anschlüssen (2.1) mit dem Drehrichtungseinsteller (2) verbunden ist.

3. Schutzmechanismus für bürstenlose Motoren nach Anspruch 1 oder 2, **dadurch gekennzeichnet, dass** das mechanische Untersetzungsgetriebe (4) mithilfe von vier Anschlüssen mit der Steuereinheit (3) verbunden ist.

## Revendications

1. Un mécanisme de protection pour moteurs sans balais comprenant les éléments suivants :
- Un bloc d'alimentation (1) alimenté par le réseau (6) chargé de générer une tension de 24 V CA pour l'alimentation des autres modules ; **caractérisé par**
- Un dispositif de réglage du sens de rotation (2) qui reçoit de l'énergie du bloc d'alimentation (1) au moyen d'une connexion électrique (1.2), dans lequel le dispositif de réglage du sens de rotation (2) comprend un interrupteur d'ouverture et de fermeture (7) à l'entrée qui est connecté à une phase d'alimentation d'entrée ;
- Une unité de contrôle (3) qui est alimentée par le bloc d'alimentation (1) au moyen d'une connexion électrique (1.1) et qui est connectée au dispositif de réglage du sens de rotation (2). L'unité de contrôle est configurable et permet de donner et de recevoir les instructions du moteur sans balais ;
- Un moteur sans balais (5) connecté à l'unité de contrôle, en particulier au moyen de :
∘ Deux connexions d'alimentation primaire (3.1) ;
o Une troisième connexion (3.2) permettant d'envoyer une instruction de l'unité de contrôle marche-arrêt au moteur (5) ;
o Une quatrième connexion (3.3) permettant d'envoyer une instruction d'ouverture/fermeture de l'unité de contrôle (3) au moteur (5) ;
o Une cinquième connexion (3.4) permettant d'envoyer les tours de rotation du moteur (5) à l'unité de contrôle ;
o Une sixième connexion (3.5) permettant d'envoyer une instruction BREAK de l'unité de contrôle (3) au moteur (5), un signal qui est envoyé lorsqu'un arrêt se produit en raison d'un surcouple ;
- Un réducteur mécanique (4) relié mécaniquement à l'arbre du moteur sans balais (5) qui est connecté à l'unité de contrôle (3) au moyen d'un ensemble de connexions pour l'envoi d'informations et l'actionnement bidirectionnel.

2. Un mécanisme de protection pour moteurs sans balais selon la revendication 1, **caractérisé par le fait que** l'unité de contrôle (3) est connectée au dispositif de réglage du sens de rotation (2) au moyen de trois connexions (2.1).

3. Un mécanisme de protection pour moteurs sans balais selon la revendication 1 ou 2, **caractérisé par le fait que** le réducteur mécanique (4) est connecté à l'unité de contrôle (3) au moyen de quatre connexions.
